# FASCICULE DE BREVET EUROPEEN

(11) **EP 2 186 583 B1**
(45) Date de publication et mention de la délivrance du brevet: **07.09.2016**
(21) Numéro de dépôt: 08020065.2
(22) Date de dépôt: 18.11.2008
(51) Int. Cl.: B23B 1/00, B23Q 17/09, B23B 29/04, B23Q 39/02

(54) **Procédé de tronçonnage et redressage simultanés**
Simultanes Abtrenn- und Berichtigungsverfahren
Method for simultaneously sawing and straightening

(43) Date de publication de la demande: 19.05.2010
(73) Titulaire: Almac S.A., 2300 La Chaux-de-Fonds (CH)
(72) Inventeur: Cassotti, Lucien, 2300 La Chaux-de-Fonds (CH); Gutknecht, Roland, 2046 Fontaines (CH)
(74) Mandataire: BOVARD AG

(56) Documents cités:
- EP-A- 1 520 657
- DE-A1-102007 005 222

## Description

### Domaine technique de l'invention

La présente invention se rapporte au domaine technique général du tronçonnage par tournage des pièces à partir d'une barre.

Par tronçonnage on désigne un processus général de découpage d'une partie d'un objet en rotation.

### Description de l'état de la technique

Historiquement, le tronçonnage des pièces, par exemple des sections de barres en matière métallique, et le redressage de la surface tronçonnée, sont effectués en deux étapes.

Dans une première étape, la section est découpée de la barre, utilisant, par exemple, un outil de tronçonnage qui enlève une rainure étroite de matière de la barre. Pendant le tronçonnage, la section étant découpée est toujours solidaire à la barre, mais la colonne résiduelle de matière connectant la section à la barre devient de plus en plus étroite. A un certain moment, la colonne devient si mince qu'elle n'est plus suffisamment solide pour tenir la section, qui tombe de la barre.

La section découpée a maintenant une surface rudement usinée par l'outil de tronçonnage. Pour finir cette surface, une deuxième étape est normalement nécessaire - une étape de redressage, dans laquelle la section découpée est encore montée sur une broche de tournage et redressée par un outil de redressage.

EP 1 520 657 divulgue un procédé d'usinage pour un tour dans lequel la pièce peut être simultanément usinée par deux outils. Ce tour peut aussi usiner deux surfaces d'extrémité de la pièce en coupant la pièce saisie par une broche principale, et après ceci une contre-broche saisit la pièce pour qu'on puisse usiner l'autre extrémité de la pièce.

DE 10 2007 005 222 concerne un dispositif un procédé pour contrôler l'usinage des pièces en utilisant des transducteurs piézocéramiques.

Les procédés connus possèdent l'inconvénient qu'ils nécessitent deux étapes distinctes, ce qui apporte une augmentation du temps de l'usinage. Ils nécessitent aussi deux mécanismes de montage pour les deux étapes de tournage (deux sortes de broches, par exemple) - une pour tenir la barre pendant le tronçonnage, et une pour tenir la section usinée pendant le redressage. Si le diamètre de la barre est petit, le montage de la petite pièce découpée peut nécessiter des mécanismes très fins et complexes pour son redressage.

Un autre inconvénient des procédés connus est que la finesse des pièces ainsi usinables est fortement limitée.

Un autre inconvénient des procédés de l'état du technique est que la colonne résiduelle de matière qui supporte la section étant découpée a un diamètre minimum assez important. C'est-à-dire que, dès que la section se détache de la barre, il reste encore une colonne ou bouton de matière à enlever.

Un autre inconvénient des procédés connus est que, comme le tronçonnage est effectué d'un coté seulement, la section découpée tombe de la barre d'une façon non équilibrée et imprévisible, et le risque d'abîmer la section au moment de séparation, par exemple par contact avec l'outil de tronçonnage ou autres parties de la machine, est important.

Un objet que la présente invention vise par conséquent à proposer un nouveau procédé de tronçonnage et de redressage dans un temps fortement réduit par rapport aux procédés de l'art antérieur.

Un autre objet de l'invention est un procédé de tronçonnage et de redressage des pièces plus fines qu'était faisable antérieurement.

Un autre objet de l'invention est un procédé de tronçonnage et de redressage dans lequel le risque d'abîmer la pièce usinée au moment de séparation est réduit.

Un autre objet de l'invention est un procédé de tronçonnage qui permet de réduire le diamètre de la colonne résiduelle restante au moment de la séparation de la pièce tronçonnée.

Un autre objet que l'invention vise à proposer est une machine-outil pour la mise en oeuvre du procédé.

### Exposé sommaire de l'invention

A cet effet, l'invention a pour objet un procédé de tronçonnage d'une section d'une barre, le procédé comprenant les étapes de :
entraînement de la barre en rotation autour d'un axe de rotation,
découpage par tournage de la section dans la barre, la section ainsi découpée ayant une surface usinée par le découpage, et
redressage par tournage de ladite surface usinée de la section découpée, le redressage de la surface usinée de la section étant découpée (2) se déroulant pendant le découpage de ladite section.

L'invention a également pour objet une machine-outil pour la réalisation du procédé, la machine-outil comprenant :
des moyens d'entraîner la barre en rotation autour d'un axe de rotation,
un outil de tronçonnage pour découper une section d'une barre par tournage, en enlevant de la matière et usinant ainsi une rainure dans la barre, de manière à laisser une surface usinée sur la section ainsi découpée, et
un outil de redressage pour redresser la surface usinée de ladite section découpée, l'outil de redressage étant suffisamment étroit d'être capable d'entrer dans la rainure usinée par l'outil de tronçonnage et ainsi de redresser ladite surface usinée de le section étant découpée pendant que le découpage de la section est toujours en marche et pendant que la section étant découpée est toujours solidaire à la barre.

Quelques variantes de l'invention sont définies dans les revendications dépendantes ci-annexées.

### Description brève des dessins

L'invention et ses avantages seront mieux compris à la lecture de la description ci-après faite à titre d'exemple non limitatif, en référence aux figures annexées qui représentent :
- la figure 1 illustre schématiquement un exemple de la disposition des outils et le tronçonnage d'une section d'une barre selon l'invention.
- la figure 2 illustre une vue en coupe de la barre, les outils et la section étant découpée.
- la figure 3 illustre une partie agrandie de la figure 2, et représente l'endroit ou se déroulent le tronçonnage et le redressage.

### Exposé détaillé de l'invention

Les éléments structurellement et fonctionnellement identiques et présents sur plusieurs figures distinctes, sont affectés d'une seule et même référence.

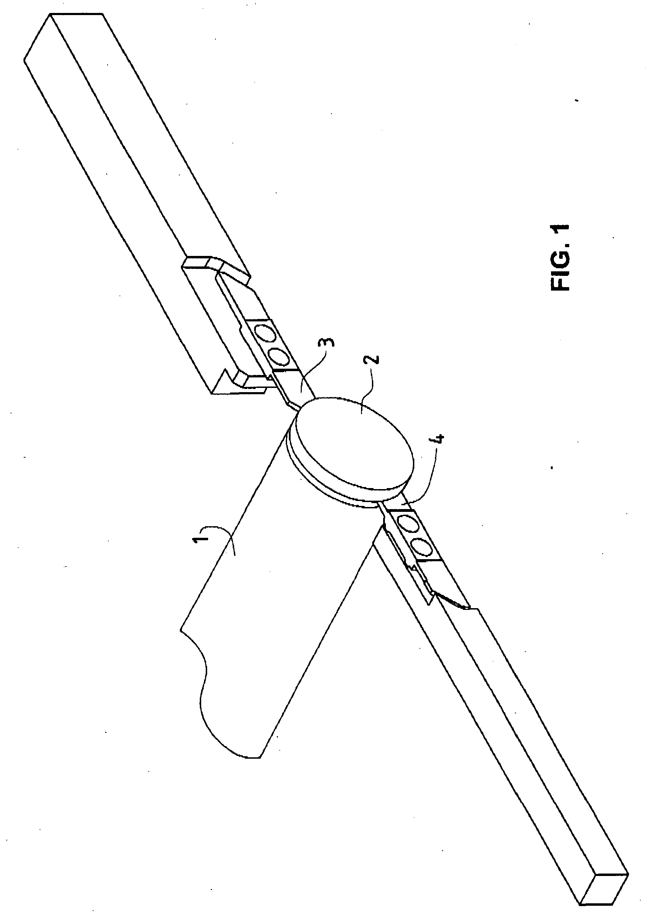

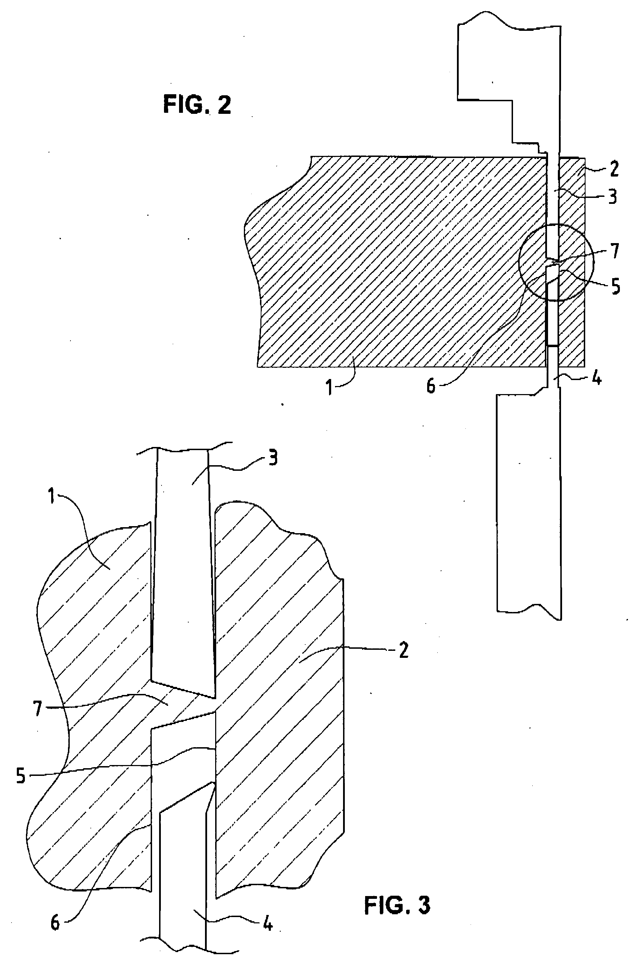

Les figures 1 à 3 illustrent le principe de tronçonnage et redressage selon la présente invention.

Une section (2) est tronçonnée de la barre (1) en rotation par un outil de tronçonnage (3). Dès que le tronçonnage a commencé, et l'outil de tronçonnage (3) a déjà enlevé de la matière dans une rainure de la barre (1), un outil de redressage (4) peut être rentré dans la rainure pour commencer le redressage de la surface (5) intérieure de la pièce étant découpée.

Les deux outils (3, 4) se déplacent dans un plan sensiblement orthogonal à l'axe de rotation de la barre (1). Avantageusement, leurs trajectoires sont disposées approximativement parallèles l'une à l'autre, mais opposées. C'est-à-dire que les outils 3 et 4 se déplacent vers l'axe de rotation des côtés opposés pendant le tronçonnage et redressage.

L'outil de redressage (4) peut posséder une dimension selon l'axe de rotation plus faible que celle de l'outil de tronçonnage (3). Dans ce cas, l'outil de redressage peut entrer dans la rainure coupée par l'outil de tronçonnage, sans toucher les surfaces (5, 6) latérales de la rainure.

Il est aussi possible d'envisager que ladite dimension de l'outil de redressage (4) soit égale ou même un peu plus grande que celle de l'outil de tronçonnage (3). Dans ce dernier cas, l'outil de redressage (4) serait utilisé pour redresser les deux surfaces (5 et 6) de la rainure en même temps.

Le fait d'entreprendre le tronçonnage et le redressage en même temps, avec des outils opposés, a l'avantage que les forces sur la section étant découpé sont fortement mieux équilibrées, ce qui veut dire qu'il est possible d'usiner des sections beaucoup moins épaisses, et que les trajectoires des outils peuvent presque atteindre l'axe de rotation de la barre. Dans ce cas, à l'instant où la section (2) se détache de la barre, la colonne (7) de matière restante est très fine.

Les forces sur la section étant découpée peuvent être encore mieux équilibrées. Par exemple, la machine-outil dans laquelle ce procédé est réalisé peut être munie de détecteurs ou autres moyens pour mesurer les forces et/ou les moments angulaires sur la section (2) occasionnés par l'outil de tronçonnage (3) et/ou l'outil de redressage (4). L'unité de commande, prenant en compte les informations reçues du détecteur ou des détecteurs, calcule des trajectoires optimisées pour assurer que les forces restent équilibrées pendant l'usinage. L'unité de commande peut aussi prendre d'autres informations en considération pour optimiser la trajectoire d'un des outils, ou les deux - par exemple la troisième force entre l'outil de tronçonnage et la matière étant tronçonnée, le diamètre de la matière encore à tronçonner (7), les caractéristiques physiques de la matière de la barre (1), la vitesse de rotation de la barre (1) et la température d'un des outils (3, 4) ou de la matière de la barre (1).

Naturellement, la présente invention est sujette à de nombreuses variations quant à sa mise en oeuvre. Bien que plusieurs modes de réalisations ou de mise en oeuvre aient été décrits, on comprend bien qu'il n'est pas concevable d'identifier de manière exhaustive tous les modes possibles. Il est bien sûr envisageable de remplacer un moyen décrit par un moyen équivalent ou une étape décrite par une étape équivalente, sans sortir du cadre de la présente invention, qui est défini par le jeu de revendications.

## Revendications

1. Procédé de tronçonnage d'une section (2) d'une barre (1), le procédé comprenant les étapes de :
entraînement de la barre (1) en rotation autour d'un axe de rotation,
découpage par tournage de la section (2) dans la barre (1), la section (2) ainsi découpée ayant une surface usinée (5) par le découpage, et
redressage par tournage de ladite surface usinée (5) de la section découpée (2),
le procédé de tronçonnage étant **caractérisé en ce que** le redressage de la surface usinée (5) de la section étant découpée (2) se déroule pendant le découpage de ladite section (2).

2. Procédé selon la revendication 1, dans lequel
l'étape de découpage est effectuée par un outil de tronçonnage (3) escamotable selon une première trajectoire dans un plan sensiblement orthogonale à l'axe de rotation,
l'étape de redressage est effectuée par un outil de redressage (4) escamotable selon une seconde trajectoire dans ledit plan.

3. Procédé selon la revendication 2, dans lequel lesdites première et seconde trajectoires sont sensiblement parallèles et opposées.

4. Procédé selon l'une des revendications 2 ou 3, comprenant les étapes de
mesurer une première force selon l'axe de rotation exercée par l'outil de redressage (4) sur la surface étant redressée (5).
piloter le déplacement de l'outil de redressage (4) telle que ladite force est maintenue entre des limites prédéterminées pendant le redressage.

5. Procédé selon l'une des revendications 2 à 4, comprenant les étapes de
mesurer une seconde force selon l'axe de rotation entre l'outil de tronçonnage (3) et la surface usinée (5) de la section découpée (2),
régler dynamiquement, à partir des paramètres mesurés, calculés ou prédéterminés, la première trajectoire et/ou la seconde trajectoire pour maintenir la différence entre les première et seconde forces dans une plage prédéterminée pendant le redressage.

6. Procédé selon la revendication 5, dans lequel lesdits paramètres comprennent au moins un de :
la première force, la seconde force, un premier moment angulaire de la première force sur la section étant découpée (2), un second moment angulaire de la seconde force sur la section étant découpée (2), une troisième force entre l'outil de tronçonnage et la matière étant tronçonnée, le diamètre de la matière encore à tronçonner (7), les caractéristiques physiques de la matière de la barre (1), la vitesse de rotation de la barre (1) et la température d'un des outils (3, 4) ou de la matière de la barre (1).

7. Machine-outil pour la réalisation d'un procédé selon la revendication 1, la machine-outil comprenant
des moyens d'entraîner une barre (1) en rotation autour d'un axe de rotation,
un outil de tronçonnage (3) pour découper une section (2) de la barre (1) par tournage, en enlevant de la matière et usinant ainsi une rainure dans la barre (1), de manière à laisser une surface usinée (5) sur la section (2) ainsi découpée, et
un outil de redressage (4) pour redresser la surface usinée (5) de ladite section découpée (2),
la machine-outil étant **caractérisée en ce que**
l'outil de redressage (4) est suffisamment étroit d'être capable d'entrer dans la rainure usinée par l'outil de tronçonnage (3) et ainsi de redresser ladite surface usinée (5) de la section étant découpée (2) pendant que le découpage de la section (2) est toujours en marche et pendant que la section (2) étant découpée est toujours solidaire à la barre (1).

8. Machine-outil selon la revendication 7, dans lequel
l'outil de tronçonnage (3) est escamotable selon une première trajectoire dans un plan sensiblement orthogonale à l'axe de rotation,
l'outil de redressage (4) est escamotable selon une seconde trajectoire dans ledit plan.

9. Machine-outil selon la revendication 8, dans laquelle lesdites première et seconde trajectoires sont sensiblement parallèles et opposées.

10. Machine-outil selon l'une des revendications 8 ou 9, comprenant
moyens de mesurer une première force selon l'axe de rotation exercée par l'outil de redressage (4) sur la surface (5) étant redressée,
moyens de piloter le déplacement de l'outil de redressage (4) telle que ladite force est maintenue entre des limites prédéterminées pendant le redressage.

11. Machine-outil selon l'une des revendications 8 à 10, comprenant moyens de mesurer une seconde force selon l'axe de rotation entre l'outil de tronçonnage (3) et la surface usinée (5) de la section découpée (2),
moyens de réglage dynamique de la première trajectoire et/ou la seconde trajectoire, à partir des paramètres mesurés, calculés ou prédéterminés, pour maintenir la différence entre les première et seconde forces dans une plage prédéterminée pendant le redressage.

12. Machine-outil selon la revendication 11, dans laquelle lesdites paramètres comprennent au moins un de :
la première force, la seconde force, un premier moment angulaire de la première force sur la section étant découpée (2), un second moment angulaire de la seconde force sur la section étant découpée (2), une troisième force entre l'outil de tronçonnage (3) et la matière étant tronçonnée (7), le diamètre de la matière encore à tronçonner (7), les caractéristiques physiques de la matière de la barre (1), la vitesse de rotation de la barre (1) et la température d'un des outils (3, 4) ou de la matière de la barre (1).

## Patentansprüche

1. Verfahren zum Abtrennen eines Abschnitts (2) einer Stange (1), wobei das Verfahren die Schritte umfasst:
- Versetzen der Stange (1) in Rotation um eine Rotationsachse,
- Abtrennen des Abschnitts (2) von der Stange (1) durch Drehen, wobei der derart abgetrennte Abschnitt (2) eine durch das Abtrennen bearbeitete Oberfläche (5) aufweist, und
- Richten der bearbeiteten Oberfläche (5) des abgetrennten Abschnitts (2) durch Drehen,
wobei das Verfahren zum Abtrennen von Abschnitten **dadurch gekennzeichnet ist, dass** das Richten der bearbeiteten Oberfläche (5) des abgetrennten Abschnitts (2) während des Abtrennens des Abschnitts (2) erfolgt.

2. Verfahren nach Anspruch 1, wobei der Schritt des Abtrennens durch ein einziehbares Trennwerkzeug (3) entlang eines ersten Weges in einer Ebene im Wesentlichen orthogonal zur Rotationsachse erfolgt,
der Schritt des Richtens durch ein einzeihbares Richtwerkzeug (4) entlang eines zweiten Weges in dieser Ebene erfolgt.

3. Verfahren nach Anspruch 2, wobei der genannte erste und zweite Weg im Wesentlichen parallel und entgegengesetzt zueinander sind.

4. Verfahren nach einem der Ansprüche 2 oder 3, umfassend die Schritte:
- Messen einer ersten Kraft entlang der Rotationsachse, welche vom Richtwerkzeug (4) auf die zu richtende Oberfläche (5) ausgeübt wird,
- Steuerung der Verschiebung des Richtwerkzeugs (4) derart, dass diese Kraft während des Richtens zwischen vorbestimmten Grenzen gehalten wird.

5. Verfahren nach einem der Ansprüche 2 bis 4, umfassend die Schritte:
- Messen einer zweiten Kraft entlang der Rotationsachse zwischen dem Trennwerkzeug (3) und der bearbeiteten Oberfläche (5) des abgetrennten Abschnitts (2),
- dynamisches Anpassen des ersten und/oder zweiten Weges, ausgehend von gemessenen, berechneten oder vorbestimmten Parametern, um die Differenz zwischen der ersten und zweiten Kraft während des Richtens in einem vorbestimmten Bereich zu halten.

6. Verfahren nach Anspruch 5, wobei die benannten Parameter mindestens einen der folgenden umfassten
- die erste Kraft, die zweite Kraft, ein erstes Drehmoment der ersten Kraft an dem abzutrennenden Abschnitt (2), ein zweites Drehmoment der zweiten Kraft an dem abzutrennenden Abschnitt (2), eine dritte Kraft zwischen dem Trennwerkzeug und dem abzutrennenden Material, den Durchmesser des Materials (7), welches noch in Abschnitte abzutrennen ist, die physikalischen Eigenschaften des Materials der Stange (1), die Geschwindigkeit der Rotation der Stange (1) und die Temperatur eines der Werkzeuge (3, 4) oder des Materials der Stange (1).

7. Werkzeugmaschine für die Durchführung des Verfahrens nach Anspruch 1, wobei die Werkzeugmaschine umfasst
- Mittel um eine Stange (1) in Rotation um eine Rotationsachse zu versetzen,
- Ein Trennwerkzeug (3) zum Abtrennen eines Abschnitts (2) der Stange (1) durch Drehen, indem Material entfernt wird und so ein Einschnitts in der Stange (1) derart eingearbeitet wird, dass eine bearbeitete Oberfläche (5) in dem so abgetrennten Abschnitt (2) zurückbleibt und
- Ein Richtwerkzeug (4) zum Richten der bearbeiteten Oberfläche (5) des abgetrennten Abschnitts (2),
wobei die Werkzeugmaschine **dadurch gekennzeichnet ist, dass**
das Richtwerkzeug (4) ausreichend schmal ist, um in den durch das Trennwerkzeug (3) gefertigten Einschnitt einzudringen, und um die bearbeitete Oberfläche (5) des abgetrennten Abschnitts (2) zu richten, während das Abtrennen des Abschnitts (2) noch andauert und während der abzutrennende Abschnitt (2) noch mit der Stange (1) verbunden ist.

8. Werkzeugmaschine nach Anspruch 7, wobei
- das Trennwerkzeug (3) entlang eines ersten Weges in einer Ebene im Wesentlichen orthogonal zu der Rotationsachse einziehbar ist,
- das Richtwerkzeug (4) entlang eines zweiten Weges in der besagten Ebene einziehbar ist.

9. Werkzeugmaschine nach Anspruch 8, wobei die ersten und zweiten Wege im Wesentlichen parallel und entgegengesetzt zueinander sind.

10. Werkzeugmaschine nach einem der Ansprüche 8 oder 9, umfassend
- Mittel zum Messen einer ersten Kraft entlang der Rotationsachse, welche von dem Richtwerkzeug (4) auf die zu richtende Oberfläche (5) wirkt,
- Mittel zur Steuerung der Verschiebung des Richtwerkzeugs (4) derart, dass diese Kraft während des Richtens zwischen vorbestimmten Grenzen gehalten wird.

11. Werkzeugmaschine nach einem der Ansprüche 8 bis 10, umfassend
- Mittel zum Messen einer zweiten Kraft entlang der Rotationsachse zwischen dem Trennwerkzeug (3) und der bearbeiteten Oberfläche (5) des abgetrennten Abschnitts (2),
- Mittel zum dynamischen Ausrichten des ersten Wegs und/oder des zweiten Wegs, ausgehend von gemessenen, berechneten oder vorbestimmten Parametern, um die Differenz zwischen den ersten und zweiten Kräften in einem vorbestimmten Bereich während des Richtens zu halten.

12. Werkzeugmaschine nach Anspruch 11, wobei die besagten Parameter zumindest einen der folgenden enthalten:
- eine erste Kraft, eine zweite Kraft, ein erstes Drehmoment der ersten Kraft an dem abzutrennenden Abschnitt (2), ein zweites Drehmoment der zweiten Kraft an dem abzutrennenden Abschnitt (2), eine dritte Kraft zwischen dem Trennwerkzeug (3) und dem noch abzutrennenden Material (7), der Durchmesser des Materials (7), welches noch in Abschnitte zu trennen ist, die physikalischen Eigenschaften des Materials der Stange (1), die Rotationsgeschwindigkeit der Stange (1) und die Temperatur eines der Werkzeuge (3, 4) oder des Materials der Stange (1).

## Claims

1. Method of cutting off a section (2) of a bar (1), the method comprising the steps of:
driving the bar (1) in rotation about an axis of rotation,
cutting by rotating of the section (2) in the bar (1), the section (2) thus cut having a surface machined (5) by the cutting, and
straightening by rotating of the said machined surface (5) of the cut section (2),
the method of cutting into segments being **characterized in that** the straightening of the machined surface (5) of the section being cut (2) takes place during the cutting of the said section (2).

2. Method according to claim 1, wherein
the step of cutting is carried out by a retractable tool (3) for cutting into segments along a first path in a plane substantially orthogonal to the axis of rotation,
the step of straightening is carried out by a retractable straightening tool (4) along a second path in the said plane.

3. Method according to claim 2, wherein the said first and second paths are substantially parallel and opposite.

4. Method according to one of the claims 2 or 3, comprising the steps of
measuring a first force along the axis of rotation exerted by the straightening tool (4) on the surface being straightened (5),
controlling the displacement of the straightening tool (4) such that the said force is maintained between predetermined limits during the straightening.

5. Method according to one of the claims 2 to 4, comprising the steps of
measuring a second force along the axis of rotation between the tool (3) for cutting into segments and the machined surface (5) of the cut section (2),
adjusting dynamically, starting from measured, calculated or predetermined parameters, the first path and/or the second path to maintain the difference between the first and second forces in a predetermined range during the straightening.

6. Method according to claim 5, wherein the said parameters comprise at least one of:
the first force, the second force, a first angular momentum of the first force on the section being cut (2), a second angular momentum of the second force on the section being cut (2), a third force between the tool for cutting into segments and the material being segmented, the diameter of the material still to be segmented (7), the physical characteristics of the material of the bar (1), the speed of rotation of the bar (1) and the temperature of one of the tools (3, 4) or of the material of the bar (1).

7. Machine tool for achieving a method according to claim 1, the machine tool comprising
means of driving a bar (1) in rotation about an axis of rotation,
a segmenting tool (3) for cutting a section (2) of the bar (1) by rotation, by removing of the material and thus machining a groove in the bar (1), in a manner so as to leave a machined surface (5) on the section (2) thus cut, and
a straightening tool (4) for straightening the machined surface (5) of the said cut section (2),
the machine tool being **characterized in that**
the straightening tool (4) is sufficiently narrow to be able to enter into the groove machined by the tool (3) for cutting into segments and thus to straighten the said machined surface (5) of the section being cut (2) while the cutting of the section (2) is still ongoing and while the section (2) being cut is still united with the bar (1).

8. Machine tool according to claim 7, wherein
the tool (3) for cutting into segments is retractable along a first path in a plane substantially orthogonal to the axis of rotation,
the straightening tool (4) is retractable along a second path in the said plane.

9. Machine tool according to claim 8, wherein the said first and second paths are substantially parallel and opposite.

10. Machine tool according to one of the claims 8 or 9, comprising
means of measuring a first force along the axis of rotation exerted by the straightening tool (4) on the surface (5) being straightened,
means of controlling the displacement of the straightening tool (4) such that the said force is maintained between predetermined limits during the straightening.

11. Machine tool according to one of the claims 8 to 10, comprising
means of measuring a second force along the axis of rotation between the tool (3) for cutting into segments and the machined surface (5) of the cut section (2),
means of dynamic adjustment of the first path and/or the second path, starting from measured, calculated or predetermined parameters, to maintain the difference between the first and second forces in a predetermined range during the straightening.

12. Machine tool according to claim 11, wherein the said parameters comprise at least one of:
the first force, the second force, a first angular momentum of the first force on the section being cut (2), a second angular momentum of the second force on the section being cut (2), a third force between the tool (3) for cutting into segments and the material being cut (7), the diameter of the material still to be segmented (7), the physical characteristics of the material of the bar (1), the speed of rotation of the bar (1) and the temperature of one of the tools (3, 4) or of the material of the bar (1).
